# EUROPEAN PATENT SPECIFICATION

(11) **EP 2 112 954 B1**
(45) Date of publication and mention of the grant of the patent: **22.12.2010**
(21) Application number: 08710055.8
(22) Date of filing: 15.02.2008
(51) Int. Cl.: B01J 19/20, B01F 7/08, B29C 47/10

(54) **METHOD FOR CONDUCTING A LIQUID-PHASE CHEMICAL REACTION INSIDE A TWIN-SCREW EXTRUDER**
VERFAHREN ZUR DURCHFÜHRUNG EINER CHEMISCHEN FLÜSSIGPHASENREAKTION IN EINEM DOPPELSCHNECKENEXTRUDER
PROCÉDÉ POUR CONDUIRE UNE RÉACTION CHIMIQUE EN PHASE LIQUIDE À L'INTÉRIEUR D'UNE EXTRUDEUSE À DOUBLE VIS

(30) Priority: 21.02.2007 IT TO20070125
(43) Date of publication of application: 04.11.2009
(73) Proprietor: F.LLI Maris S.P.A., 10090 Rosta (Torino) (IT)
(72) Inventor: MARIS, Gianfranco, I-10098 Rivoli (Torino) (IT)
(74) Representative: Gerbino, Angelo
(86) International application number: PCT/IB2008/050559
(87) International publication number: WO 2008/102290

(56) References cited:
- EP-A- 0 033 220
- EP-A- 0 875 356
- EP-A- 1 013 410
- JP-A- 2005 139 384
- US-A1- 2003 212 207

## Description

The present invention relates to a method for conducting a chemical reaction between at least two reagents in the liquid state inside a twin-screw extruder.

As is known, an apparatus of this kind comprises a cylindrical housing which defines internally a cavity inside which the abovementioned chemical reaction may take place and inside which two interpenetrating screws rotating about their longitudinal axis are mounted.

In particular in the case where there is a significant difference between the quantities of liquid reagents supplied to the extruder - for example differences of one order of magnitude or more between the respective percentages - a notable lack of uniformity in the reaction product has been encountered. This lack of uniformity may result in the end product being rejected during quality control or in any case may produce agglomerations of solidified material which subject the mechanical components of the extruder to damaging stresses.

In order to overcome these drawbacks, the object of the present invention is to provide a method of the type indicated in the introduction of the present description and **characterized in that** the abovementioned reagents are subjected to the action of mixing means.

The mixing action ensures a homogeneous concentration of the various reagents so that the desired chemical reaction develops in a substantially uniform manner in the entire reagent liquid phase. The homogeneity of the end product is thus ensured, while harmful stressing of the mechanical components of the extruder is avoided.

The application of the method according to the invention is particularly convenient in those cases where there is a significant difference between the quantities of reagents supplied to the extruder, for example when the mass ratio of the quantities of two different reagents is greater than 50:1, and in particular greater than 1000:1 or 10,000:1.

Substantially any type of mixing means may be used in the method according to the invention, for example static mixers, pairs of interacting mixing members keyed onto the shafts of the screws, as well as combinations of several different types of mixers. It should be noted that the expression "static mixer" is understood in the present description as meaning a device comprising a duct having, arranged therein, deflectors, baffles, partitions or similar obstacles able to induce mixing of fluids flowing with a laminar flow inside it.

The mixing means may be mounted outside or inside the extruder or also both outside and inside the extruder.

Further advantages and characteristics of the present invention will emerge from the detailed description which follows, provided with reference to the accompanying drawings, in which:
Figure 1 is a side elevation cross-sectional view of a twin-screw extruder section inside which a method according to the invention is implemented; and
Figure 2 is a schematic perspective view of two mixing members of the extruder according to Figure 1.

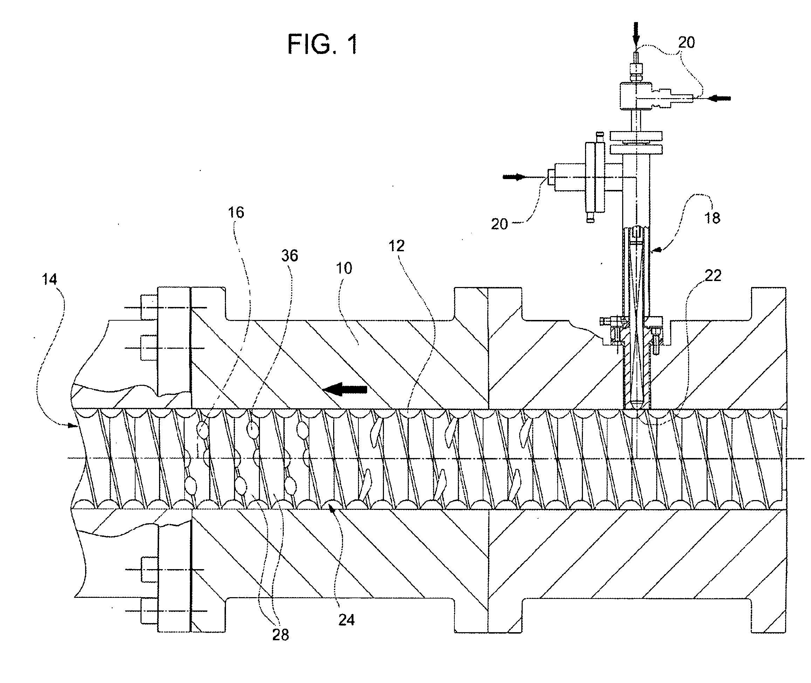

A twin-screw extruder (Fig. 1) comprises a cylindrical housing 10 which defines internally a cavity 12 inside which two interpenetrating screws 14 (only one of which is visible in Figure 1) are mounted. The screws 14 rotate about their longitudinal axis 16 which is parallel to that of the cavity 12.

A static mixer 18, for example produced by the company Sulzer of Winterthur, Switzerland, is mounted outside the extruder. The mixer 18 has several inlet openings 20 for supplying different liquid reagents and has an outlet orifice 22 which emerges inside the internal cavity 12 of the extruder.

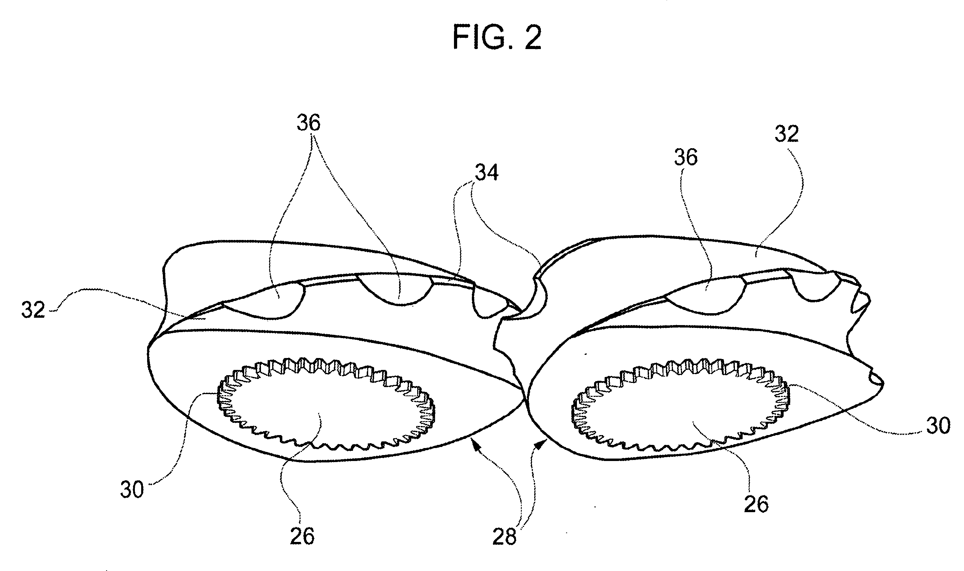

Pairs of interacting mixing members 28 are also respectively keyed onto facing sections 24 of the shafts 26 of the screws 14 (Fig. 2). Each of said members is shaped in the manner of a sleeve having a central axial hole 30 which allows keying onto the shaft 26, and a relief 32 extending in a substantially helical manner on the side surface. The crest 34 of the relief 32 has a plurality of notches 36 arranged in succession along its length. The pairs of mixing members 28 together form a further mixing device in addition to the static mixer.

In order to conduct inside the extruder a chemical reaction between several reagents in the liquid state, the latter are supplied separately to the static mixer 18 via the inlet openings 20 and are mixed, flowing inside it. The mixed reagents are then supplied via the orifice 22 inside the cavity 12 of the extruder, where they are subjected to a further mixing action by the pairs of interacting members 28. On the one hand, in fact, the crest 34 of the relief 32 of a member 28 exerts a "cleaning" action on the surfaces of the associated member 28 with which it comes into contact following rotation of the entire screw 14 about its longitudinal axis 16. On the other hand, the presence of the notches 36 on the crests 34 causes a backflow of the reagents with further mixing thereof and disintegration of agglomerations which may have formed.

Overall, owing to the presence of the static mixer 18 and the pairs of mixing members 28, very efficient mixing of the liquid reagents may be obtained, with optimum uniformity of the properties of the end reaction product and the substantial absence of damaging stresses affecting the mechanical components of the extruder.

Obviously, without modifying the principle of the invention, the constructional details and the embodiments may greatly vary with respect to that described purely by way of example, without thereby departing from its scope of protection. In particular, in order to conduct the method according to the invention, it is also possible to use an extruder having only a static mixer or only mixing members keyed onto the screw shafts.

## Claims

1. Method for conducting a chemical reaction between at least two reagents in the liquid state inside a twin-screw extruder comprising a cylindrical housing (10) which defines internally a cavity (12) inside which said chemical reaction takes place and inside which two interpenetrating screws (14) rotating about their longitudinal axis (16) are mounted, wherein said reagents are subjected to the action of mixing means comprising a static mixer (18) mounted outside the extruder and having an outlet orifice (22) which emerges inside the internal cavity (12) of the extruder and wherein the mass ratio of said at least two reagents is greater than 50:1.

2. Method according to claim 1, wherein said mixing means also comprise pairs of interacting mixing members (28) which are respectively keyed onto facing sections (24) of the shafts (26) of said screws (14), at least one mixing member (28) of each pair being shaped in the manner of a sleeve having a central axial hole (30) which allows keying and a relief (32) extending in a substantially helical manner on the side surface, the crest (34) of said relief (32) having at least one notch (36) along its length.

3. Method according to Claim 2, wherein in that both the interacting mixing members (28) of each pair are shaped in the manner of a sleeve having a central axial hole (30) which allows keying and a relief (32) extending in a substantially helical manner on the side surface, the crest (34) of said relief (32) having at least one notch (36) along its length.

4. Method according to Claim 2 or 3, wherein in that the crest (34) of said relief (32) has a plurality of notches (36) arranged in succession along its length.

5. Method according to Claim 1, wherein said mixing means are mounted inside the extruder or both outside and inside the extruder.

## Patentansprüche

1. Verfahren zur Durchführung einer chemischen Reaktion zwischen mindestens zwei Edukten in flüssigen Zustand innerhalb eines Doppelschneckenextruders umfassend ein zylindrisches Gehäuse (10), das nach innen hin einen Hohlraum (12) begrenzt, in welchem die chemische Reaktion stattfindet und in welchem zwei ineinandergreifende Schnecken (14) angeordnet sind, die sich um ihre Längsachse (16) drehen, wobei Mischmittel auf die Edukte einwirken, die einen statischen Mischer (18) umfassen, welcher außerhalb des Extruders angeordnet ist und eine Auslassöffnung (22) hat, die in den inneren Hohlraum (12) des Extruders mündet, und wobei das Gewichtsverhältnis der mindestens zwei Edukte größer als 50:1 ist.

2. Verfahren nach Anspruch 1, wobei die Mischmittel weiterhin Paare wechselwirkender Mischglieder (28) umfassen, die jeweils auf sich gegenüberliegenden Abschnitten (24) der Achsen (26) der Schnecken (14) festgeriegelt sind, wobei mindestens ein Mischglied (28) jedes der Paare wie eine Manschette geformt ist, die ein mittiges Achsloch (30) aufweist, welches das Festriegeln ermöglicht, sowie ein Reliefstück (32), das sich im wesentlichen spiralartig über die Seitenfläche erstreckt, wobei der Kamm (34) des Reliefstücks (32) entlang seiner Längsausdehnung mindestens eine Aussparung (36) aufweist.

3. Verfahren nach Anspruch 2, bei welchem beide wechselwirkende Mischglieder (28) jedes Paares wie eine Manschette geformt sind, die ein mittiges Achsloch (30) aufweist, welches das Festriegeln ermöglicht, sowie ein Reliefstück (32), das sich im wesentlichen spiralartig über die Seitenfläche erstreckt, wobei der Kamm (34) des Reliefstücks (32) entlang seiner Längsausdehnung mindestens eine Aussparung (36) aufweist.

4. Verfahren nach Anspruch 2 oder 3, bei welchem der Kamm (34) des Reliefstücks (32) mehrere Aussparungen (36) aufweist, die nacheinander entlang seiner Längsausdehnung angeordnet sind.

5. Verfahren nach Anspruch 1, wobei die Mischmittel innerhalb des Extruders oder außerhalb und innerhalb des Extruders angeordnet sind.

## Revendications

1. Procédé destiné à conduire une réaction chimique entre au moins deux réactifs à l'état liquide à l'intérieur d'une extrudeuse à double vis qui comprend un logement cylindrique (10) qui définit de manière interne une cavité (12) à l'intérieur de laquelle se déroule ladite réaction chimique et à l'intérieur de laquelle sont montées deux vis interpénétrantes (14) qui tournent autour de leur axe longitudinal (16), dans lequel lesdits réactifs sont soumis à l'action de moyens de mélange qui comprennent un mélangeur statique (18) monté à l'extérieur de l'extrudeuse et qui présente un orifice de sortie (22) qui émerge à l'intérieur de la cavité interne (12) de l'extrudeuse et dans lequel le rapport de masse desdits deux réactifs au moins est supérieur à 50 : 1.

2. Procédé selon la revendication 1, dans lequel lesdits moyens de mélange comprennent également des paires d'éléments de mélange interactifs (28) qui sont clavetés respectivement sur des sections qui se font face (24) des arbres (26) desdites vis (14), au moins un élément de mélange (28) de chaque paire présentant une forme similaire à celle d'un manchon qui présente un trou axial central (30) qui permet un clavetage et un relief (32) qui s'étend d'une façon sensiblement hélicoïdale sur la surface latérale, la crête (34) dudit relief (32) présentant au moins une encoche (36) sur sa longueur.

3. Procédé selon la revendication 2, dans lequel les deux éléments de mélange interactifs (28) de chaque paire présentent une forme similaire à celle d'un manchon qui présente un trou axial central (30) qui permet un clavetage et un relief (32) qui s'étend d'une façon sensiblement hélicoïdale sur la surface latérale, la crête (34) dudit relief (32) présentant au moins une encoche (36) sur sa longueur.

4. Procédé selon la revendication 2 ou la revendication 3, dans lequel la crête (34) dudit relief (32) présente une pluralité d'encoches (36) disposées à la suite sur sa longueur.

5. Procédé selon la revendication 1, dans lequel lesdits moyens de mélange sont montés à l'intérieur de l'extrudeuse ou à l'extérieur et à l'intérieur de l'extrudeuse.
